(19) Europäisches Patentamt
European Patent Office
Office européen des brevets

(11) **EP 1 280 077 A2**

(12) **EUROPEAN PATENT APPLICATION**

(43) Date of publication:
**29.01.2003 Bulletin 2003/05**

(51) Int Cl.⁷: **G06F 17/30**

(21) Application number: **02254825.9**

(22) Date of filing: **09.07.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **26.07.2001 US 916392**

(71) Applicant: **Hewlett-Packard Company**
**Palo Alto, CA 94304 (US)**

(72) Inventor: **Newsome, Mark R.**
**Corvallis, OR 97330 (US)**

(74) Representative: **Jackson, Richard Eric et al**
**Carpmaels & Ransford,**
**43 Bloomsbury Square**
**London WC1A 2RA (GB)**

(54) **Content clipping method**

(57)    Content clipping is provided. Upon a user selecting content within a network document (11,40) to be clipped, the content is parsed for clickable images (41-43). Any discovered clickable images (41-43) are displayed to a user. An image is clickable if it is enclosed in an anchor tag or other structure that indicates a referenced content address. Upon a user selecting one of the clickable images (41-43) a bit-mapped image (36,61) of the selected clickable image (41-43) is stored for later access by the user.

FIGURE 2

**Description**

BACKGROUND

The present invention pertains to web browsers and pertains particularly to a content clipping service.

Consumers commonly clip advertising and coupons from traditional print media (e.g., newspapers and magazines). With the increasing popularity of the web browser, many companies are turning to on-line advertising. However, web browsers do not provide easy means for users (consumers) to "clip" advertising and coupons. Instead, users are forced to print an entire web document. Printing a web page often requires printing significantly more than a desired advertisement or coupon. Many users are unlikely to print an entire web page for an advertisement because of the high-cost of printer ink and paper.

Another option for a user of a web browser is to bookmark the web page containing an interesting ad or interesting content. However, revisiting a bookmarked page does not guarantee that the "interesting" ad will still be there. Many web sites dynamically place ads. In this case each view of the page is likely to show a different ad.

SUMMARY OF THE INVENTION

In accordance with the preferred embodiment of the present invention content clipping is provided. Upon a user selecting content within a network document to be clipped, the content is parsed for clickable images. Any discovered clickable images are displayed to a user. An image is clickable if it is enclosed in an anchor tag or other structure that indicates a referenced content address. Upon a user selecting one of the clickable images a bit-mapped image of the selected clickable image is stored for later access by the user.

BRIEF DESCRIPTION OF THE DRAWINGS

Figure 1 shows the display of interface tools used to clip portions of a web page in accordance with a preferred embodiment of the present invention.

Figure 2 illustrates use of an interface tool to clip a portion of a web page in accordance with a preferred embodiment of the present invention.

Figure 3 shows storage of a clipped portion of a web page in accordance with a preferred embodiment of the present invention.

Figure 4 and Figure 5 illustrate use of another interface tool to clip a portion of a web page in accordance with a preferred embodiment of the present invention.

Figure 6, Figure 7 and Figure 8 also illustrate use of an interface tool to clip a portion of a web page in accordance with a preferred embodiment of the present invention.

DESCRIPTION OF THE PREFERRED EMBODIMENT

The present invention enables users (consumers) to selectively save electronic ads and coupons, organize them in a database such as a card-file, and later review, discard, email, or print them.

A browser plug-in, when enabled, allows a user to select content for clipping from a web page or other network document. A network document is any document (such as a web page) that is available over a network (e.g., the internet). The tool saves the selected content and associated information (e.g., URL, date, user-specified description) in a database such as a card-file. This user defined database allows the user to store content in a file structure hierarchy with search capabilities.

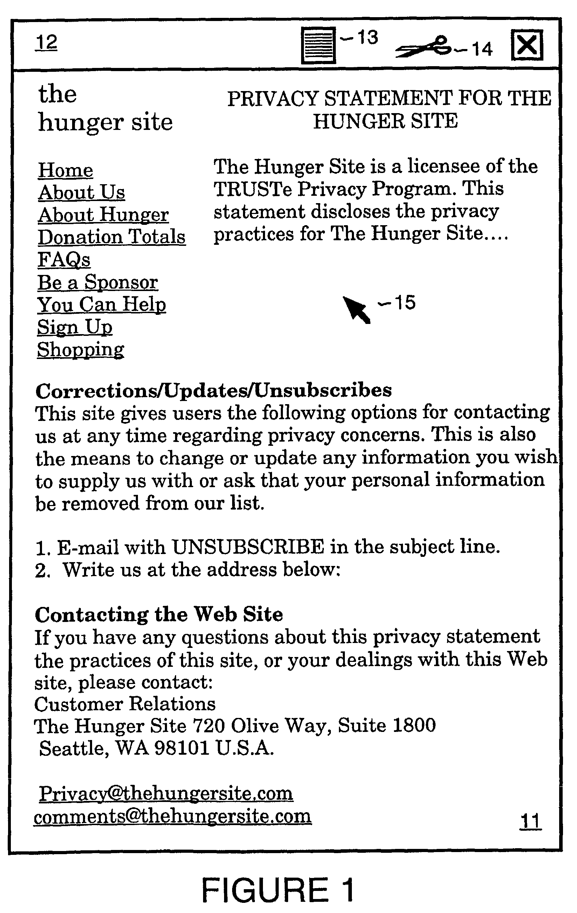

For example, in Figure 1, the browser plug-in is represented by an icon button 13 and an icon button 14 on a button bar 12.

For example, a coupon or add can be captured by stretching a "rubber-band" around a desired region of a computer screen. The selected region is saved in bitmap form.

In the preferred embodiment, the "rubber band"is brought up by selecting icon button 14 on button bar 12. A cursor 15, may then be used to draw a "rubber band"or bounding box around information within a web page 11 to be selected for placement in a database, for example a card file.

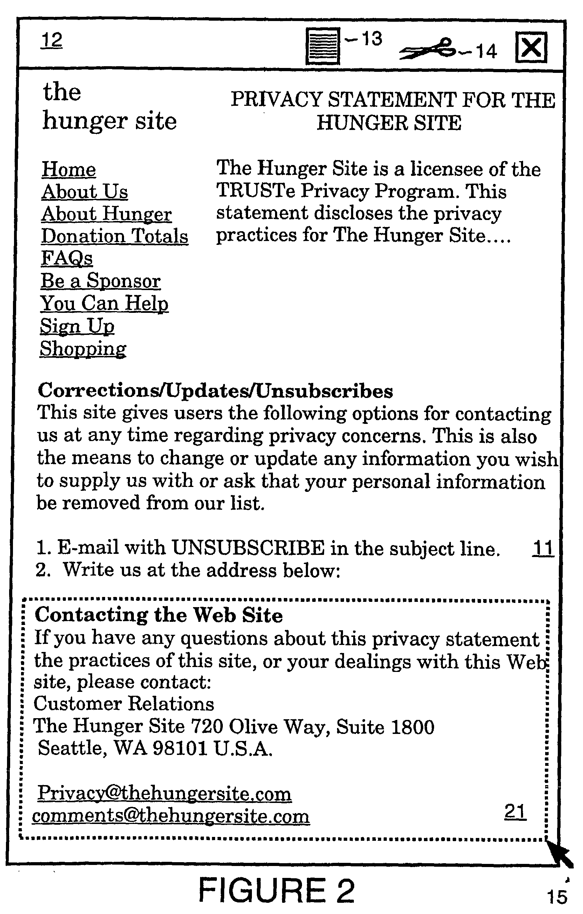

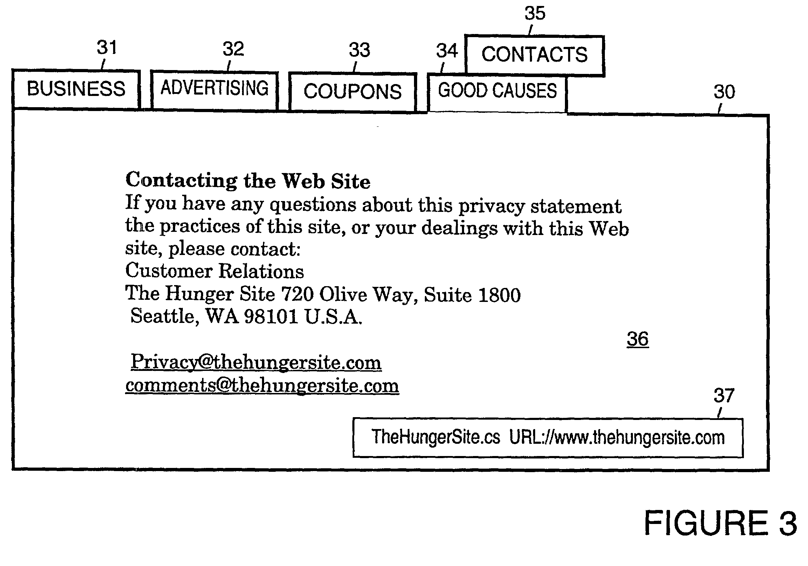

Figure 2 illustrates cursor 15 being used to place a bounding box around area 21 of page 11. The information within area 21 is extracted and placed in a card file 30, as shown in Figure 3.

For example, as shown by Figure 3, the information extracted includes bit mapped information 36 extracted from within area 21 of page 11 (shown in Figure 2), as well as a title and web address 37 for page 11 (shown in Figure 2).

Card file 30 has a user-defined file structure hierarchy with search capabilities. For example, in Figure 3, card file 30 is shown with a user-defined tab 31 labeled business, a user-defined tab 32 labeled advertising, a user-defined tab 33 labeled coupons and a user-defined tab 34 labeled good causes. Within the category represented by user-defined tab 34, a user can select one of several existing sub-categories. As shown in Figure 3, a user has selected the sub-category contacts, represented by the display of a second level tab 35. The information extracted from area 21 of page 11 has been placed as a card within the category "good causes"within the subcategory "contacts".

In one embodiment of the present invention, card file 30 is invoked by simply clicking icon button 13 on button-bar 12. Clicking icon button 13 on button-bar 12 again hides card file 30. In this way a location within card file 30 can be selected to receive clipped material from page 11.

In order to clip coupons and advertisements in web pages, the preferred embodiment of the present invention takes advantage of the fact that most web-based coupons and advertisements are encoded as images in a common format such as jpg, gif, or png. The web browser accesses the HTML currently displayed in the browser window to obtain these images.

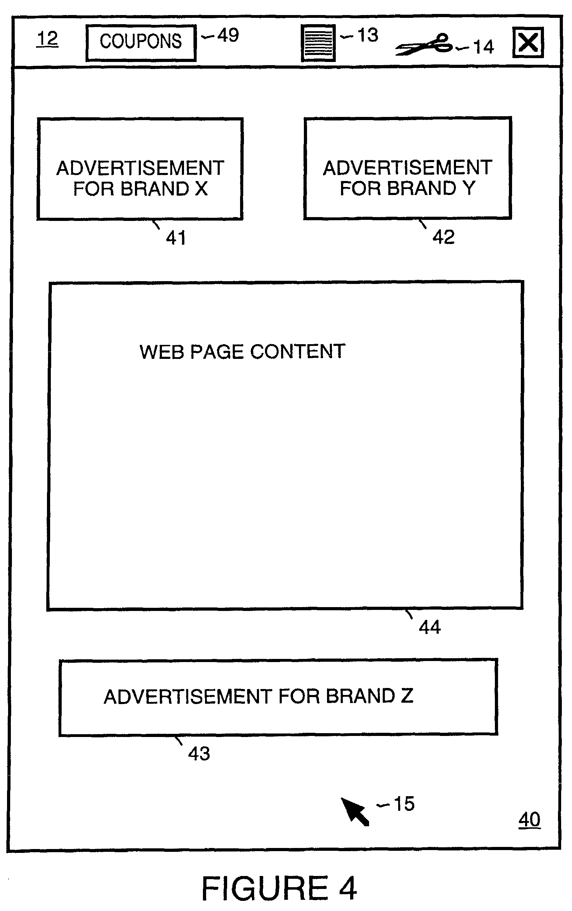

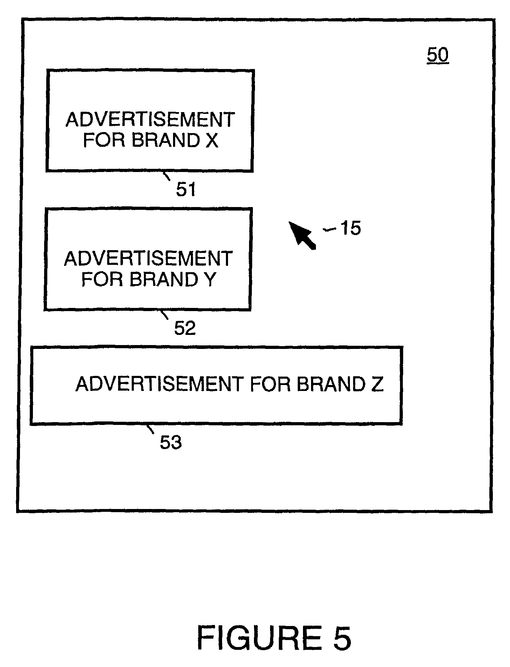

For example, an advertising/coupon clipping tool is represented in Figure 4 by an icon button 49 on button bar 12. A page 40 includes web page content 44, an advertisement 41, an advertisement 42 and an advertisement 43. Using a cursor 15 to click on icon button 49 results in the appearance of a window 50 shown in Figure 5. Window 50 shows a thumbnail icon 51 of advertisement 41, a thumbnail icon 52 of advertisement 42 and a thumbnail icon 53 of advertisement 43.

For example, advertisement 41, advertisement 42 and advertisement 43 are found by parsing the HTML of page 40, looking for "clickable images". An image is "clickable" if it is enclosed in an anchor tag or other structure that indicates a referenced content address. For example, an anchor tag has the following form:

<A href= .... > <IMG SRC=xxx></a>.

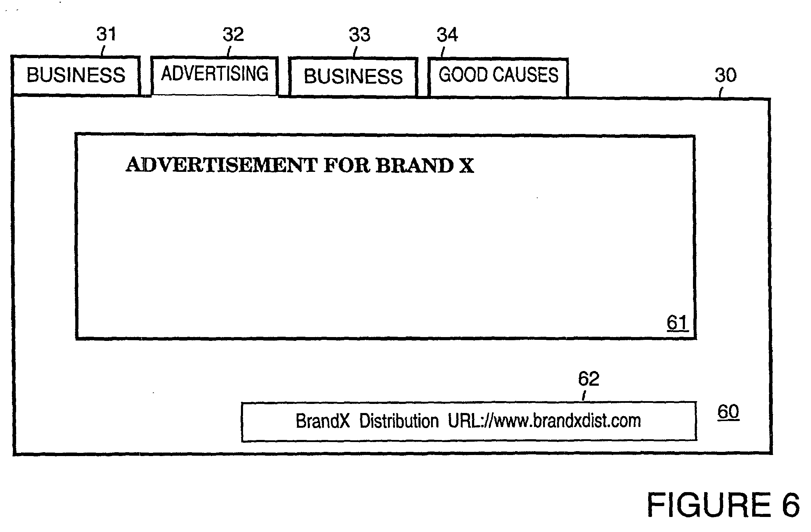

Selecting one of the thumbnail icons shown in Figure 5 results in the advertisement being placed at a selected location within card file 30. For example, Figure 6 shows that advertisement 41 has been placed within a card 60 of card file 30. Originally displayed information from advertisement 41 is placed in an area 61 within card 60. A web address for advertisement 41 is placed within an area 62 of card 60.

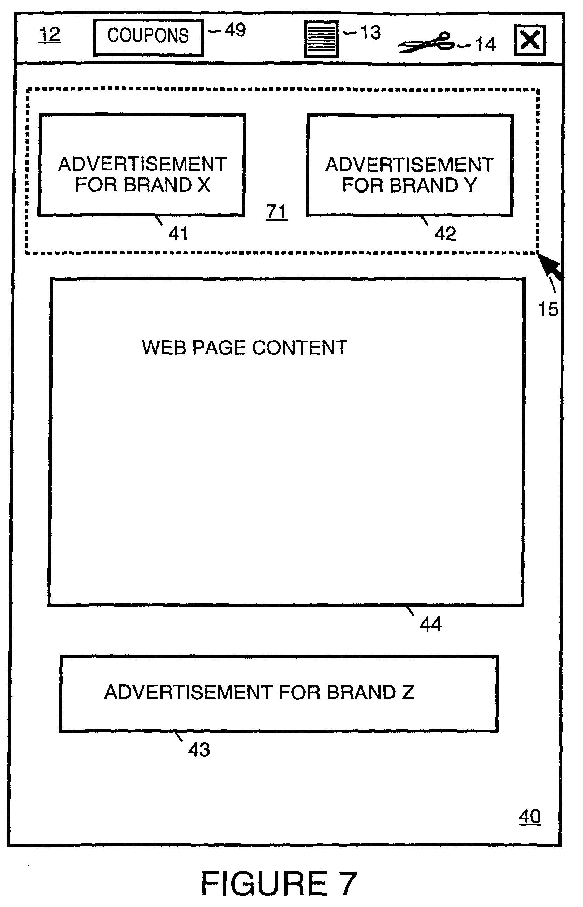

The clipping tool icon button 49 on button bar 12 can be used in conjunction with the "rubber band" brought up by selecting icon button 14 on button bar 12. For example, as illustrated by Figure 7, the "rubber band" is brought up by selecting icon button 14 on button bar 12. Cursor 15 may then be used to draw a "rubber band" or bounding box around information within a page 40. Once this information is selected, the bits within the bounding box are collected. Selecting clipping tool icon button 49 results in a parsing of the HTML that generates the displayed information within the bounding box. The parsing is done looking for "clickable images". As defined above, an image is "clickable" if it is enclosed in an anchor tag of the following form:

<A href= .... > <IMG SRC=xxx></a>.

An attempt is made to match bits within the bounding box to any coupons/ads harvested from the HTML (by parsing). If there is only one clickable image found, this image is placed in a user defined location within card file 30. If there is no match to a clickable image the user is prompted to try again.

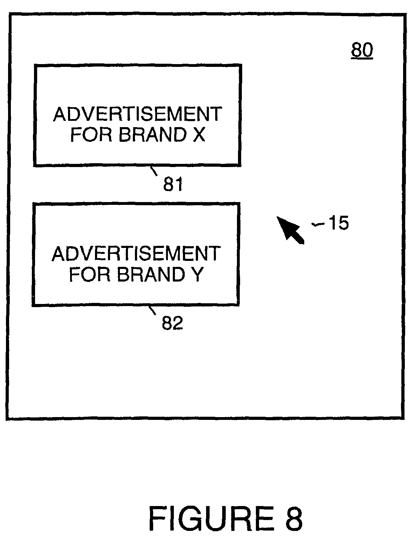

If there is more than one match, this results in the appearance of a window 80 shown in Figure 8. Window 80 shows a thumbnail icon 81 of advertisement 41 and a thumbnail icon 82 of advertisement 42, since both these advertisements were within the bounding box shown drawn in Figure 7. Selecting one of the thumbnail icons results in the advertisement being placed at a selected location within card file 30.

The foregoing discussion discloses and describes merely exemplary methods and embodiments of the present invention. As will be understood by those familiar with the art, the invention may be embodied in other specific forms without departing from the spirit or essential characteristics thereof. Accordingly, the disclosure of the present invention is intended to be illustrative, but not limiting, of the scope of the invention, which is set forth in the following claims.

**Claims**

1. A method for content clipping comprising the following steps:

   (a) providing a selection tool (14) to a user, the selection tool (14) allowing the user to indicate content within a network document (11,40) to be clipped; and,
   (b) upon the user selecting content within the network document (11,40) to be clipped, performing the following substeps:

      (b.1) storing a bit-mapped image (36,61) of the selected content within a database (30), and
      (b.2) storing a network address (37,62) for the network document (11,40) along with the bit-mapped image (36,61) of the selected content.

2. A method as in claim 1 wherein in substep (b.1) the bit-mapped image (36,61) of the selected content is stored in a user selected location within the database (30).

3. A method as in claim 1 wherein step (a) further comprises, upon a user selecting the selection tool (49), the following substeps:

   (a.1) parsing a current network document (11,40) for clickable images (41-43),
   (a.2) indicating to the user, clickable images (41-43) found in substep (b.1), and
   (a.3) upon a user selecting one of the clickable images (41-43), performing the following substep:

> (a.3.1) storing for later access by the user a bit-mapped image (36,61) of the selected clickable image (41-43).

4. A method as in claim 3 wherein:

> in substep (a.3.1) the bit-mapped image (36,61) of the selected clickable image (41-43) is stored in a card file (30); and
> (a.3.2) storing for later access by the user a network address (37,62) for the clickable image (41-43) in the card file (30).

5. A method as in claim 3 wherein substep (a.2) includes the following substep:

> displaying thumbnail sketches (51-53,81,82) of the clickable images (41-43).

6. Storage media for storing software, the software when executed on a computing system performing a method for content clipping, the method comprising the following steps:

> (a) providing a selection tool (14) to a user, the selection tool (14) allowing the user to indicate content within a network document (11,40) to be clipped; and,
> (b) upon the user selecting content within the network document (11,40) to be clipped, performing the following substeps:
>
>> (b.1) storing a bit-mapped image (36,61) of the selected content within a database (30), and
>> (b.2) storing a network address (37,62) for the network document (11,40) along with the bit-mapped image (36,61) of the selected content.

7. Storage media as in claim 6 further comprising upon a user selecting the selection tool (49), the following substeps:

> (a.1) parsing a current network document (11,40) for clickable images (41-43),
> (a.2) indicating to the user, clickable images (41-43) found in substep (a.1), and
> (a.3) upon a user selecting one of the clickable images (41-43), performing the following substep:
>
>> (a.3.1) storing for later access by the user a bit-mapped image (36,61) of the selected clickable image (41-43).

8. Storage media as in claim 7 wherein in substep (a. 3), upon the user selecting one of the clickable images (41-43), the following substep is also performed:

> (a.3.2) storing for later access by the user a network address (37,62) for the clickable image (41-43) in a user selected location within a card file (30).

9. Storage media as in claim 8 wherein substep (a.2) includes the following substep:

> displaying thumbnail sketches (51-53,81,82) of the clickable images (41-43).

12          ▣ ~13    ✂ ~14   ☒

## the hunger site

PRIVACY STATEMENT FOR THE HUNGER SITE

Home
About Us
About Hunger
Donation Totals
FAQs
Be a Sponsor
You Can Help
Sign Up
Shopping

The Hunger Site is a licensee of the TRUSTe Privacy Program. This statement discloses the privacy practices for The Hunger Site....

➘ ~15

**Corrections/Updates/Unsubscribes**
This site gives users the following options for contacting us at any time regarding privacy concerns. This is also the means to change or update any information you wish to supply us with or ask that your personal information be removed from our list.

1. E-mail with UNSUBSCRIBE in the subject line.
2. Write us at the address below:

**Contacting the Web Site**
If you have any questions about this privacy statement the practices of this site, or your dealings with this Web site, please contact:
Customer Relations
The Hunger Site 720 Olive Way, Suite 1800
Seattle, WA 98101 U.S.A.

Privacy@thehungersite.com
comments@thehungersite.com          11

# FIGURE 1

12                                    ▤ ~13   ✂~14   ☒

## the hunger site

### PRIVACY STATEMENT FOR THE HUNGER SITE

Home
About Us
About Hunger
Donation Totals
FAQs
Be a Sponsor
You Can Help
Sign Up
Shopping

The Hunger Site is a licensee of the TRUSTe Privacy Program. This statement discloses the privacy practices for The Hunger Site....

**Corrections/Updates/Unsubscribes**
This site gives users the following options for contacting us at any time regarding privacy concerns. This is also the means to change or update any information you wish to supply us with or ask that your personal information be removed from our list.

1. E-mail with UNSUBSCRIBE in the subject line.     <u>11</u>
2.  Write us at the address below:

**Contacting the Web Site**
If you have any questions about this privacy statement, the practices of this site, or your dealings with this Web site, please contact:
Customer Relations
The Hunger Site 720 Olive Way, Suite 1800
Seattle, WA 98101 U.S.A.

Privacy@thehungersite.com
comments@thehungersite.com                          <u>21</u>

# FIGURE 2                                    15

EP 1 280 077 A2

31 BUSINESS
32 ADVERTISING
33 COUPONS
34 GOOD CAUSES
35 CONTACTS
30

**Contacting the Web Site**
If you have any questions about this privacy statement
the practices of this site, or your dealings with this Web
site, please contact:
Customer Relations
The Hunger Site 720 Olive Way, Suite 1800
Seattle, WA 98101 U.S.A.

36

Privacy@thehungersite.com
comments@thehungersite.com

37

TheHungerSite.cs  URL://www.thehungersite.com

FIGURE 3

FIGURE 4

ADVERTISEMENT
FOR BRAND X

51

ADVERTISEMENT
FOR BRAND Y

52

ADVERTISEMENT FOR BRAND Z

53

50

— 15

FIGURE 5

FIGURE 6

30

31 BUSINESS

32 ADVERTISING

33 BUSINESS

34 GOOD CAUSES

61 ADVERTISEMENT FOR BRAND X

60

62 BrandX Distribution URL:/www.brandxdist.com

FIGURE 7

**FIGURE 8**